# EUROPEAN PATENT SPECIFICATION

(11) **EP 1 488 652 B1**
(45) Date of publication and mention of the grant of the patent: **29.11.2006**
(21) Application number: 03747569.6
(22) Date of filing: 19.03.2003
(51) Int. Cl.: H04Q 7/34

(54) **METHODS, APPARATUS, AND SYSTEMS FOR SIMULATION OF MIXED TRAFFIC IN A WIRELESS NETWORK**
VERFAHREN, VORRICHTUNG UND SYSTEME ZUR SIMULATION VON GEMISCHTE VERKEHR IN EINEMDRAHTLÖSEN NETZWERK
PROCEDES, APPAREIL ET SYSTEMES POUR LA SIMULATION DE TRAFIC MIXTE DANS UN RESEAU SANS FIL

(30) Priority: 19.03.2002 US 365184 P
(43) Date of publication of application: 22.12.2004
(73) Proprietor: LCC International, Inc., McLean, VA 22102 (US)
(72) Inventor: TANNAN, Vikrant, Potomac, MD 20854 (US)
(74) Representative: Cozens, Paul Dennis
(86) International application number: PCT/US2003/008397
(87) International publication number: WO 2003/094538

(56) References cited:
- US-A- 5 794 128
- OONO T ET AL: "THE PROPOSAL OF WIRELESS MULTIMEDIA COMMUNICATION SYSTEM WITH INTEGRATION OF PACKET-SWITCHED AND CIRCUIT-SWITCHED CHANNELS" COMMUNICATIONS FOR THE INFORMATION AGE. HOLLYWOOD, NOV. 28 - DEC. 1, 1988, PROCEEDINGS OF THE GLOBAL TELECOMMUNICATIONS CONFERENCE AND EXHIBITION(GLOBECOM), NEW YORK, IEEE, US, vol. 1, 8 November 1998 (1998-11-08), pages 120-125, XP010339628
- HASAN CAM: "Distributed dynamic channel and packet assignment for wireless multimedia traffic" CONFERENCE PROCEEDINGS ARTICLE, vol. 3, 23 September 2000 (2000-09-23), pages 1131-1135, XP010532703

## Description

### Field of the Invention

The present invention relates to simulating networks and, more particularly, to simulating networks with heterogeneous traffic.

### Background of the Invention

Capacity planning tools are used to study the performance of a network. Typically, capacity planning tools are tailored to a specific type of network and traffic. For example, known network capacity planning tools use the Erlang-B model to estimate the capacity of a circuit-switched network for voice traffic under a given set of circumstances. However, because of the assumptions used in the Erlang-B model, tools that use this model are unsuited for studying other types of networks or traffic, such as a packet-switched networks carrying data traffic or a network that carries a mix of data and voice traffic.

An example can be found enclosed in document US 6272450 (Telefonaktiebolaget Ericsson), 7-8-2001.

Networks that carry a mix of traffic are becoming more common. For example, next generation wireless mobile networks, known as 3^{rd} generation (3G) networks, can support both voice and data traffic. In addition to voice calls, 3G networks are expected to provide data services, such as Internet World Wide Web browsing, e-mail, file transfer protocol ("FTP") services, and multimedia clips. Unfortunately, known tools are unsuited to networks, such as 3G networks, that carry a mix of traffic.

It would therefore be desirable to provide methods, apparatus, and systems that are suitable for analyzing networks that carry a heterogeneous mix of traffic, as well other shortcomings of the prior art.

### SUMMARY OF THE INVENTION

In accordance with an aspect of the present invention, a method is provided for simulating a network processing circuit-based traffic and packet-based traffic using at least one model, said method comprising: receiving information indicating a configuration of resources in the network; receiving a first set of parameters for circuit-based traffic; receiving a second set of parameters for packet-based traffic; receiving information that specifies how resources in the network are shared for servicing the circuit-based traffic and packet-based traffic; generating respective requests for the circuit-based traffic based on the first set of parameters and at least one model for simulating the circuit-based traffic and for the packet-based traffic based on the second set of parameters and at least one model for simulating the packet-based traffic; determining resources available in the network for servicing the requests based on the configuration of the network and the information that specifies the sharing of the resources in the network; determining events for each of the requests are determined based on the availability of resources in the network; and determining statistics that indicate a quality of service provided by the network for the requests based on the determined events.

In accordance with another aspect of the present invention, a system is provided for simulating a network processing circuit-based traffic and packet-based traffic using at least one model, said system comprising an interface configured to receive information indicating a configuration of resources in the network, a first set of parameters for circuit-based traffic and a second set of parameters for packet-based traffic; a resource table that indicates resources in the network available for servicing the circuit-based traffic and packet-based traffic; a least one model for generating simulated circuit-based traffic based on the first set of parameters and at least one model and for generating simulated packet-based traffic based on the second set of parameters; a resource manager that allocates resources to service the simulated circuit-based traffic and simulated packet-based traffic based on the configuration of the network and the resource table; and a statistics collector that determines statistics indicating a quality of service provided by the network when servicing the simulated circuit-based traffic and simulated packet-based traffic based on the allocation of resources.

Further aspects of the present invention are provided in independent claims 14 and 15.

Further features of the invention are characterised by the dependent claims.

Additional features of the invention will be set forth in part in the description which follows, and in part will be obvious from the description, or may be learned by practice of the invention. It is to be understood that both the foregoing general description and the following detailed description are exemplary and explanatory only and are not restrictive of the invention, as described. Further features and/or variations may be provided in addition to those set forth herein.

### BRIEF DESCRIPTION OF THE DRAWINGS

The accompanying drawings, which are incorporated in and constitute a part of this specification, illustrate embodiments of the invention and together with the description, serve to explain the principles of the invention. In the Figures:
Fig. 1 illustrates a simulator for simulating traffic in a network, in accordance with the principles of the present invention;
Fig. 2 illustrates a block diagram of the simulator shown in Fig. 1, in accordance with the principles of the present invention;
Fig. 3 illustrate a block diagram of a modeling module used for simulating traffic in a network, in accordance with the principles of the present invention;
Figs. 4-5 illustrate a process for simulating traffic in a network, in accordance with the principles of the present invention; and
Figs. 6-17 show exemplary graphs that may be provided to illustrate a network's anticipated performance based on the simulated traffic, in accordance with the principles of the present invention., in accordance with the principles of the present invention

### DESCRIPTION OF THE EMBODIMENTS

Methods, apparatus, and systems are provided to simulate a network carrying a heterogeneous mix of traffic. Input parameters for the simulation are received. Based on the input parameters, a virtual representation of the network and a heterogeneous mix of simulated traffic are generated. One or more simulation runs are then performed to load the virtual representation of the network based on events from the heterogeneous mix of simulated traffic. During each simulation run, statistics are collected as the events are processed through the virtual representation. The statistics may then be presented, for example, in the form of a graph, to show an expected performance for the network based on the performance of the virtual representation. The statistics may also be presented to show the effect of variations in the mix of simulated traffic on the performance of the virtual network.

Reference will now be made in detail to exemplary embodiments of the invention, examples of which are illustrated in the accompanying drawings. Wherever possible, the same reference numbers will be used throughout the drawings to refer to the same or like parts.

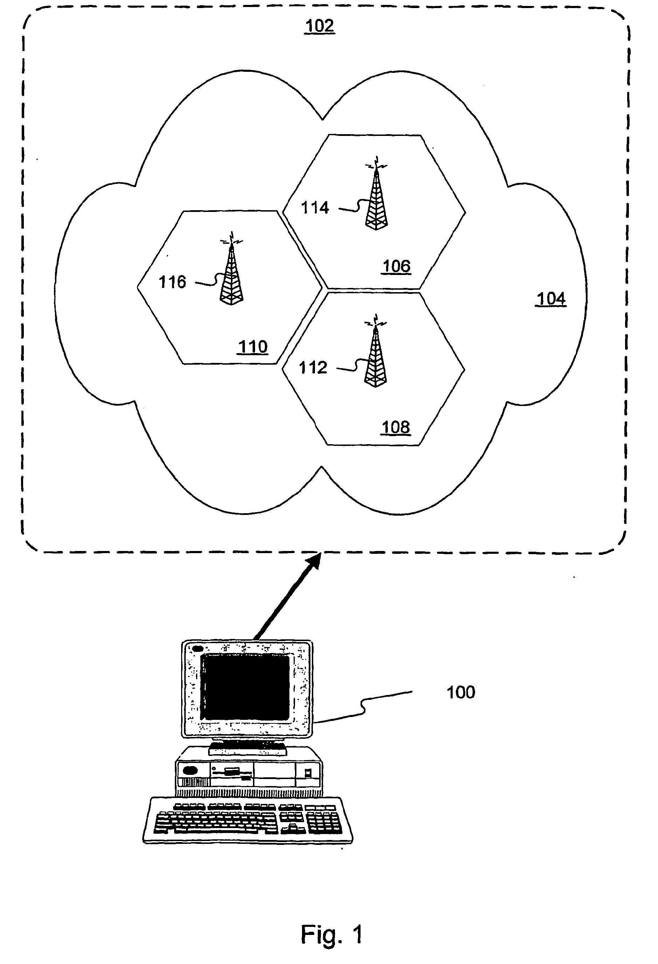

Fig. 1 illustrates a simulator 100 for simulating traffic in a network, in accordance with the principles of the present invention. Simulator 100 provides a processing platform for conducting the simulations. In particular, simulator 100 may be implemented using known equipment, such as a personal computer and/or a workstation with a keyboard, mouse, display, printer, storage device, etc. Although simulator 100 is shown as a single apparatus or device, simulator 100 may comprise a plurality of devices that are coupled together. For example, simulator 100 may comprise one or more client computers that are coupled to a server via a network.

Simulator 100 may also include software that serves as an interface for a user (not shown), such as a browser application, or a hardware interface (not shown), such as a network adapter, that is coupled another device or network. Simulator 100 may also include one or more modules of executable program code, such as modules of Java code.

Simulator 100 further includes a virtual representation 102. Virtual representation 102 may be configured to represent a portion of a network or an entire network. In one embodiment, virtual representation 102 is configured to represent a Global System for Mobile Communications ("GSM") network 104 comprising nodes 106, 108, and 110 and base stations 112, 114, and 116. Virtual representation 102 may implemented in a variety of forms, such as a table or list, or one or more persistent software objects stored on a storage device (not shown) that is coupled to simulator 100.

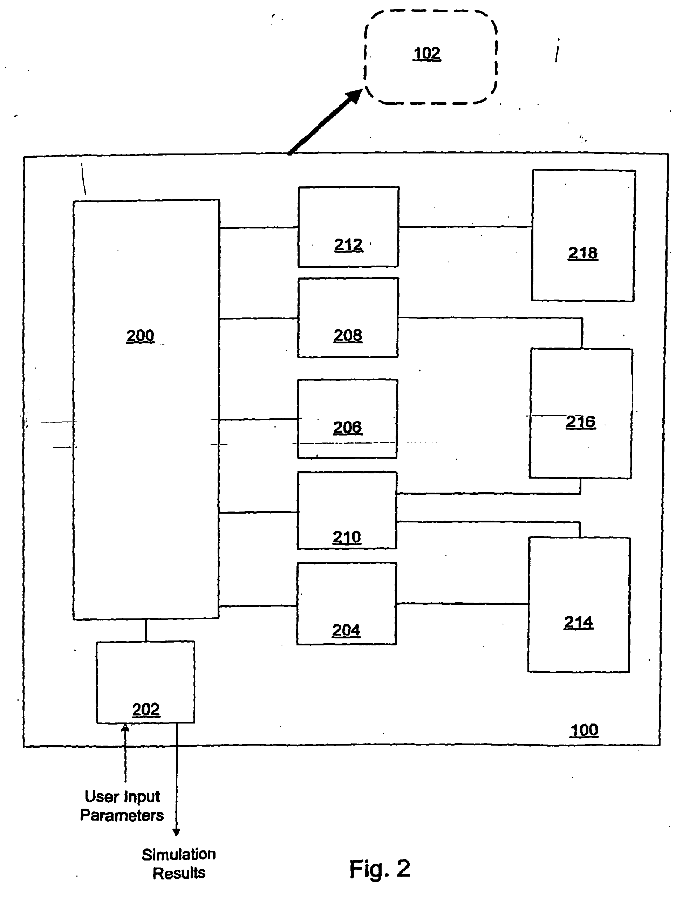

Fig. 2 illustrates a block diagram of simulator 100, in accordance with the principles of the present invention. As shown, simulator 100 comprises several components for implementing virtual representation 102 and for conducting simulations on virtual representation 102. For example, simulator 100 may include a simulation controller 200, an interface module 202, a cell generator/reader 204, a channel resource manager 206, a modeling module 208, an event controller 210, a statistics collector 212, a resource table 214, an event list 216, and a statistics table 218.

In one embodiment, the components of simulator 100 are implemented using an object oriented programming language, such as the Java programming language. For example, the components of simulator 100 may be implemented using one or more Java classes. The components of simulator 100 may then communicate with each other using the messaging techniques of Java. Alternatively, the components of simulator 100 may be implemented using other known programming languages, such as the C++ programming language.

Simulation controller 200 controls the progress of simulation runs on virtual representation 102 on behalf of simulator 100. Simulation controller 200 is coupled to interface module 202, cell generator/reader 204, modeling module 206, event controller 208, channel resource manager 210, and statistics collector 212. Simulation controller 200 may be coupled to these components based on the exchange of messages. In particular, simulation controller 200 may include object oriented program code that has a defined interface for exchanging messages with the other components.

Interface module 202 serves as an external interface for simulator 100 to receive the input parameters that define each simulation run. Interface module 202 may be coupled to a user input device, such as a keyboard, to receive the input parameters from the user. Interface module 202 may also be coupled to another device via a network connection, such as an Ethernet connection, to receive the input parameters from a file downloaded into simulator 100.

In addition, interface module 202 is coupled to simulation controller 200. Accordingly, interface module may pass the input parameters to simulation controller 200 using one or more messages.

The input parameters may specify: control information for the simulation; a configuration of each cell in virtual representation 102; a configuration of the resources available in each cell; one or more sets of parameters used to generate simulated traffic; parameters for simulating the propagation of traffic in each cell; and parameters for simulating mobility of traffic between cells in virtual representation 102.

In one embodiment, the parameters that specify control information for the simulation include: a number of repetitions or runs for the simulation, a run time; a time limit; a growth in capacity of virtual representation 102; and a growth in simulated traffic generated for each simulation run.

In order to specify the configuration of each cell in virtual representation 102, the parameters may include information, such as a location of the cell, an orientation of the cell relative, a cell radius, a transmitter height, an antenna orientation, an antenna beam-width, a neighbor list for each cell, and a transmitted power.

The parameters may also specify the configuration of resources of each cell, such as a total number of base channels, a total number of channels reserved for circuit-switched traffic, a total number of channels reserved for packet-switched traffic, and a time limit that any given resource may be allocated to a particular type of packet-switched call.

In order to generate simulated circuit-switched traffic for each cell, the input parameters may include one or more sets of parameters that specify: a mean call arrival rate; a mean call length; a growth factor of mean call arrival rate per simulation run; an activity factor; a data rate; a number of base channels to be used by each circuit-switched call; a service priority; a service type; and seed indicators and seeds for random processes used to generate circuit-switched traffic calls.

In order to generate simulated packet-switched traffic calls for each cell, the input parameters may include one or more sets that specify: a mean call arrival rate; a mean amount and mean length of packets for a burst in the packet-switched calls; a mean number of bursts that include sets of continuous packets per packet-switched call; a mean time between bursts per packet-switched call; information for simulating one or more bursts; a time limit for allocating a request for packet-switched calls; a data rate; a maximum number of base channels to be used by each packet-switched call; a minimum number of base channels to be used by each packet-switched call; an indicator specifying a particular traffic model for generating a packet-switched call; a service priority; a maximum tolerable delay; a service type; and seed indicators and seeds for random processes used to generate packet-switched traffic calls.

In order to simulate the propagation of traffic in each cell and the mobility of traffic between cells in virtual representation 102, the input parameters may include: information indicating a preference for a particular propagation model; a frequency used to transmit traffic in each cell; one or more factors of an equation used to calculate propagation in each cell; a height for a receiver; and information for modeling mobility of traffic between cells. In addition, the input parameters may indicate whether or not modeling propagation and mobility is requested.

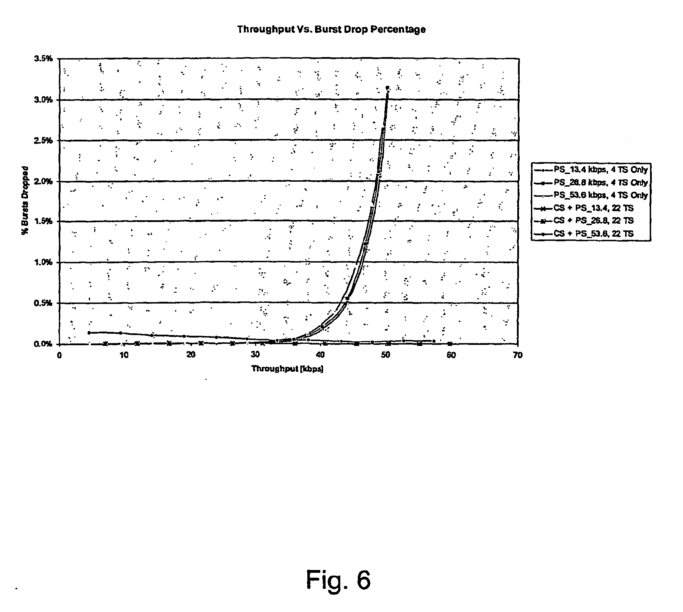

In addition, interface module 202 may include software that presents statistics collected by simulator 100. For example, interface module 202 may include a graphics program that outputs various graphs and data to illustrate the statistics collected by simulator 100. Specific examples of these graphs are discussed below with reference to Figs. 6-17.

Cell generator/reader 204 is coupled to simulation controller 200 and generates virtual representation 102 based on the input parameters. Cell generator/reader 204 may be implemented as object oriented code that executes one or more methods to generate a configuration of each cell for virtual representation 102 and a configuration for the resources in each cell based on the input parameters. Cell generator/reader 204 is also coupled to resource table 214 and may include program code that executes one or more methods to store the configuration of virtual representation 102 in resource table 214.

Resource table 214 is coupled to cell generator/reader 204 and is configured to store the configuration of virtual representation 102. In particular, resource table 214 may be structured to include a variety of fields or arrays (not shown) to indicate the configuration of each cell of virtual representation 102 and its respective resources. For example, resource table 214 may include fields that: identify each cell of virtual representation 102; identify each resource of each cell in virtual representation 102; indicate whether a resource or percentage of resources are reserved for packet-switched traffic or circuit-switched traffic; and indicate whether a resource is currently allocated. A resource of a cell in virtual representation 102 may, for example, be based on a traffic channel, a set of frequencies, or a set of codes.

Resource table 214 may also include fields or arrays that indicate which channels of virtual representation 102 are reserved exclusively for circuit-switched calls or packet-switched calls. The number of channels reserved for packet-switched calls or circuit-switched calls may be specified based on the input parameters. Resource table 214 may be configured to allow cell generator/reader 204 to dynamically alter the sharing of resources. For example, resource table 214 may allow cell generator/reader 204 to alter the number of reserved resources based on one or more messages from simulation controller 200. Simulation controller 200 may generate these messages based on monitoring the amount of traffic generated by modeling module 206 or based on messages from statistics collector 212.

Modeling module 206 is coupled to simulation controller 200 and generates each individual type of traffic that is specified for a simulation run. In particular, modeling module 206 may include program code to generate a plurality of respective requests or calls to simulate packet-switched traffic and circuit-switched traffic. For example, modeling module 206 may be implemented as object oriented program code that executes one or more methods to generate the calls for each individual type of traffic based on the input parameters. In addition, modeling module 206 may include program code for one or more models for each individual type of traffic. Modeling module 206 may include program code that uses known techniques in the one or more models, such as Poisson, Exponential, Geometric, Uniform, Pareto, Cauchy, etc., to control the distribution of calls generated for each individual type of traffic.

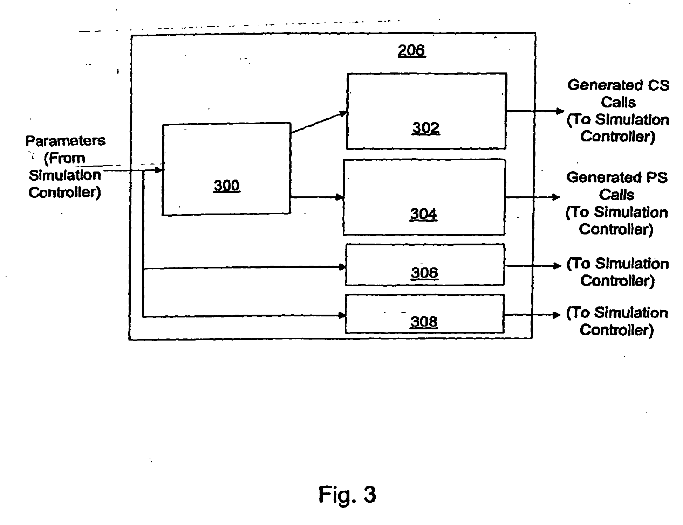

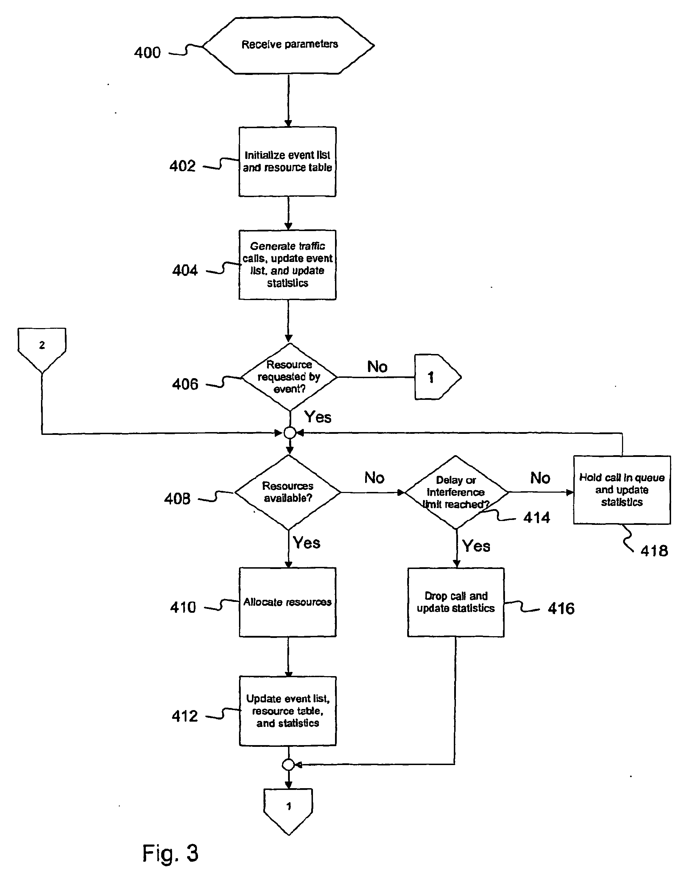

Modeling module 206 may further include program code to simulate the propagation and mobility effects that may be experienced by base stations and mobile units in a wireless network represented by virtual representation 102. For example, modeling module 206 may include program code to simulate propagation effects or interference within a cell of virtual representation 102. An embodiment of modeling module 206 is described with reference to Fig. 3.

Event controller 208 is coupled to simulation controller 200 and event list 216. Event controller 208 is configured to receive the calls for each of the individual types of traffic generated by modeling model 206 based on messages from simulation controller, create respective events for each of these calls, and aggregate these events into event list 216 to generate a heterogeneous mix of traffic. For example, event controller 208 may include program code that is configured to receive packet-switched calls and circuit-switched calls generated by modeling module 206 based on messages from simulation controller 200. Event controller 208 may further include program code that creates respective events, such as events indicating a beginning and end of each of the calls. Event controller 208 further includes program code that aggregates these events into event list 216 to form a heterogeneous mix of traffic. For example, event controller 208 may execute one or more object oriented methods to insert events into event list 216.

Event list 216 is coupled to event controller 216 and configured to include a variety of fields or arrays (not shown) to accommodate the events of the heterogeneous mix of traffic. For example, event list 216 may include fields that: identify each call in the simulated traffic; identify a type of call (e.g., packet-switched or circuit-switched); indicate a priority associated with each call; a length for each call (e.g., a call length or packet length); and indicate a location for each call. For each event, event list 216 may include: an event time; an event type to indicate the beginning and end of a packet-switched call or a circuit-switched call, and the beginning and end of a burst in a packet-switched call; information indicating whether a call uses a random access protocol for accessing virtual representation 102; information indicating the start and end of a packet in a packet-switched call; an identifier for each cell in virtual representation 102; an identifier for each call; an identifier for a particular burst in a packet-switched call; an identifier for a packet in a packet-switched call; a count of the events in event list 216; and an identifier that indicates progress of packets successfully transmitted for a packet-switched call.

Channel resource manager 210 is coupled to simulation controller 200, event list 216, and resource table 214 to manage the allocation of resources of virtual representation 102. In particular, channel resource manager 210 may include program code to access event list 216 and determine which calls are currently pending for the circuit-switched and packet-switched traffic based on the events in event list 216. Channel resource manager 210 may then include one or more queues (not shown) to hold the pending calls while searching for available resources in resource table 214. The queues may be implemented as one or more object oriented classes that are configured to interface channel resource manager 210.

Channel resource 210 may also include program code to access resource table 214 and allocate one or more resources to the pending calls, for example, based on their priority. Channel resource manager 210 may include program code to determine the amount of resources that need to be allocated to a pending call. Channel resource manager 210 may then determine the amount of resources based on a specified capacity for each resource, such as 8 to 12 kbits per second. The capacity for each resource may be indicated in resource table 214 or may be stored in a variable accessible by channel resource manager 210. For example, channel resource manager 210 may include program code that allocates one resource to a voice call for circuit-switched traffic and allocates multiple resources to a burst in a packet-switched call.

For wireless networks, channel resource manager 210 may include program code for implementing a multiple access protocol for packet data to define how mobile units, such as mobile phones, gain access and send packets to a base station, such as base station 114, represented in virtual representation 102. In one embodiment, channel resource manager 210 includes program code that implements a modified version of the multiple access scheme used by the GSM Phase 2+ General Packet Radio Service (GPRS).

Furthermore, for wireless networks, channel resource manager 210 may include other program code to implement a multiple access protocol based on various access schemes, such as a random access scheme. When using a random access scheme, a mobile station (MS) connected to virtual representation 102 will transmit a burst once a resource becomes available. Accordingly, channel resource manager 210 may include program code that simulates a random access scheme by allocating a pending call as a burst, when one or more resources becomes available in resource table 214.

Statistics collector 212 is coupled to simulation controller 200 and statistics table 218 and monitors the progress of each simulation run. In particular, statistics collector 212 includes program code that is configured to monitor the events for each of the calls in the simulated traffic and record data associated with each of these events. For example, statistics collector 212 may record data, such as blocking, throughput, and delay, for each cell of virtual representation 102.

Statistics collector 212 may record data in statistics table based on receiving messages from simulation controller 200 or based on polling simulation controller 200 on a periodic basis. In addition, statistics collector 212 may temporarily withhold collecting statistics for a requested "stabilization period" based on the input parameters. A stabilization period may, for example, be useful to allow modeling module 206 and event controller 208 to stabilize the generation of the simulated traffic.

Statistics table 218 is coupled to statistics collector 212 and is configured to store the data recorded by statistics collector 212. For example, statistics table 218 may include the following fields or arrays (not shown) for circuit-switched calls: a count of current circuit-switched calls; a total count of circuit-switched calls; a count of circuit-switched calls that were blocked; a mean call length for circuit-switched calls; a count of resources or channels in virtual representation 102 used for circuit-switched calls; a throughput value for circuit-switched calls; and a throughput value for the most recent circuit-switched call.

Statistics table 218 may also be configured include the following fields or arrays (not shown) for packet-switched calls: a count of current packet-switched calls; a count of current bursts in packet-switched calls; a total count of packet-switched calls; a total count of bursts in packet-switched calls; a count of bursts in packet-switched calls that were dropped; a count of bursts in packet-switched calls that were delayed; a minimum percentage of bursts in packet-switched calls that were dropped; a maximum percentage of bursts in packet-switched calls that were dropped; a mean waiting time delay for bursts in packet-switched calls; a squared value of the mean waiting time delay for bursts in packet-switched calls; a standard deviation for the waiting time delay for bursts in the packet-switched calls; a minimum mean waiting time delay for bursts in packet-switched calls; a maximum mean waiting time delay for bursts in packet-switched calls; an overall mean waiting time delay for bursts in packet-switched calls; a squared value of the overall mean waiting time delay for bursts in packet-switched calls; a standard deviation of the overall burst waiting time delay for bursts in packet-switched calls; a minimum value for the overall mean waiting time delay for bursts in packet-switched calls; a maximum value for the overall mean waiting time delay for bursts in packet-switched calls; the overall mean waiting time for bursts plus service time delays for packet-switched calls; the overall burst squared waiting time delayed for bursts plus service time delays for packet-switched calls; the overall burst waiting time plus the standard deviation for service time delays for packet-switched calls; the overall burst mean waiting time plus the minimum value for service time delays for packet-switched calls; the overall burst mean waiting time plus the maximum value for service time delay for packet-switched calls; a minimum value for burst waiting time delay; a maximum value for burst waiting time delay; a distribution of burst waiting time delays; the minimum burst waiting time plus service time delays for packet-switched calls; the maximum burst waiting time plus service time delays for packet-switched calls; a distribution of the burst waiting time delay plus service time delays for packet-switched calls; a mean burst sized per packet-switched call; the mean number of packets per burst; a mean burst length; the current number of bursts queued by channel resource manager 210; a count of resources or channels being used for packet-switched calls; a throughput for packet-switched calls; a throughput of the most recent packet-switched call.

Furthermore, statistics table 218 may include fields or arrays (not shown) to store data regarding the events for each call in the simulated traffic. For example, statistics table 218 may include the following fields: a count of the events in event list 216; a time associated with each event in event list 216; a utilization factor; an ending time for a previous event; a minimum value for the utilization factor; a maximum value for the utilization factor; a distribution of resources and channels used in virtual representation 102; a distribution of inter-arrival between calls and bursts; a distribution of call and burst lengths; and a start time for a previous event.

Fig. 3 illustrate a block diagram of modeling module 206 used for simulating traffic in a network, in accordance with the principles of the present invention. As shown, modeling module 206 may include a random process generator 300, one or more circuit-switched call generators 302, one or more packet-switched call generators 304, a mobility model 306, and a propagation model 308. Modeling module 206 uses circuit-switched call generators 302 and packet-switched call generators 304 to generate calls for each type of traffic to be simulated.

In order to simulate the randomness of actual traffic, modeling module 206 includes random process generator 300 as a source of randomness. In particular, random process generator 300 includes program code to create and maintain a plurality of random seeds using known pseudo-random number generators. Random process generator 300 may then provide the random seeds to circuit-switched call generators 302 and packet-switched call generators 304.

Circuit-switched call generators 302 include program code to generate calls that simulate circuit-switched traffic. For example, circuit-switched call generators 302 may be configured to execute one or more object oriented methods to generate calls based on the random seeds from random process generator 300 and parameters received from simulation controller 200 that specify, for example, a call arrival rate and call length. In one embodiment, circuit-switched call generators 302 include program code that implements the Erlang-B model to generate circuit-switched calls.

Packet-switched call generators 304 includes program code to generate packet-switched calls for simulating packet-switched traffic. For example, packet-switched call generators 304 may be configured to execute one or more object-oriented methods to generate calls based on the random seeds from random process generator 300. In addition, packet-switched call generators 304 may include program code to model packet-switched traffic using the input parameters received from simulation controller 200, such as sets of parameters indicating packet call arrival times, a number of packet calls or bursts per session, a reading time between packet calls, a number of packets within a packet call, an inter-arrival time between packets within a packet call, and a packet length.

In one embodiment, packet-switched call generators 304 include program code that implements the known Poisson process to generate calls for packet-switched traffic. Packet-switched call generators 304 may also include program code to determine the number of bursts in packet-switched calls and the time between bursts in packet-switched calls based on a geometric distribution. Packet-switched call generators 304 may vary the mean number of packets within a burst in a packet-switched call for each type of service being simulated. For example, for WWW Internet browsing, packet-switched call generators 304 may include program code that creates a geometric distribution to determine the number of packets within a burst in a packet-switched call. Packet-switched call generators 304 may also include program code that creates a geometric distribution to determine the inter-arrival time between packets within a burst in a packet-switched call. Furthermore, packet-switched call generators 304 may include program code to vary the packet size within a packet-switched call based on the application being simulated and a Pareto distribution.

Modeling module 206 may also include mobility model 306 and propagation model 308 to simulate the mobility of traffic between cells in virtual representation 102 and to simulate the variations in the propagation of traffic in each cell of virtual representation 102. For example, mobility model 306 may include program code to generate one or more events that are inserted by event controller 208 to indicate that a call is moving from one cell to another. In response to these events, channel resource manger 210 may then attempt to allocate different resources in resource table 214 to that call.

Propagation model 308 may include program code to generate information that supplements the calls generated by circuit-switched call generators 302 and packet-switched call generators 304. In particular, propagation model 308 may include program code to create information that indicates the effect of propagating traffic or interference for that call, for example, based on the frequency of the call and a distance associated with the call. Simulation controller 200 may receive this information in a message from modeling module 206 and pass it to event controller 208. When generating the events for the call, event controller 208 may then incorporate the information with the event as it is stored in event list 216. Channel resource manager 210 may then account for propagation information based on the information in event list 216.

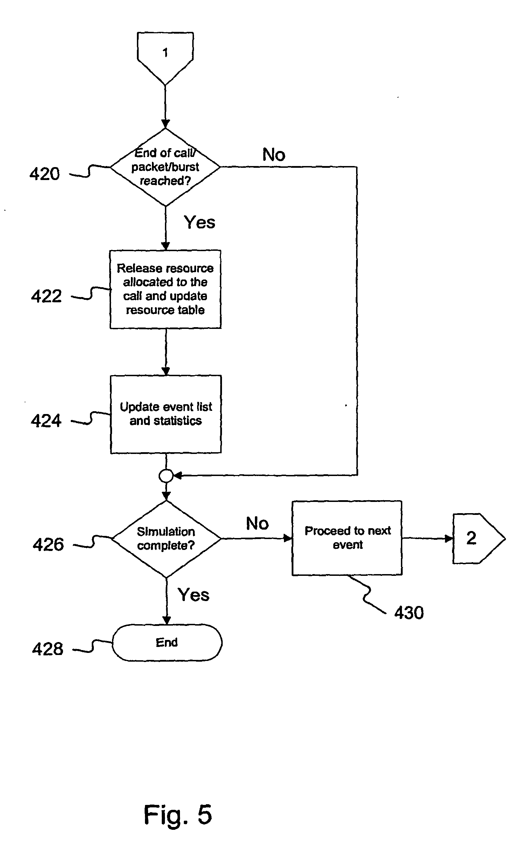

Figs. 4-5 illustrate a process for simulating traffic in a network, in accordance with the principles of the present invention. Referring now to Fig. 4, in stage 400, interface module 202 receives the input parameters for the simulation. For example, interface module 202 may receive the input parameters based on input from a user or from a file downloaded into simulator 100. Interface module 202 then provides the input parameters to simulation controller 200. Simulation controller 200 interprets the input parameters and determines control information for the simulation, such as a period of time covered by a simulation run, a period of time for conducting the simulation run, and a number of times that the simulation run is to be repeated. In addition, simulation controller 200 distributes the received input parameters to the other components of simulator 100.

In stage 402, event list 216 and resource table 214 are initialized. For example, simulation controller 200 may provide parameters to event controller 208 and cell generator/reader 204. Event controller 208 and cell generator/reader 204 may then initialize event list 216 and resource table 214, respectively. When initializing event list 216, event controller 208 may clear the current values stored in event list 216 and configure event list 216 to include the fields specified by the received input parameters. When initializing resource table 214, cell generator/reader 204 may clear the current values stored in resource table 214 and configure resource table 214 to create the resources of virtual representation 102 as specified by the input parameters.

In stage 404, modeling module 206 generates requests or calls for each individual type of traffic. For example, simulation controller 200 may provide sets of parameters from the received input parameters to modeling module 206. Modeling module 206 may then generate requests or calls using one or more models. For example, as explained above, modeling module 206 may generate requests or calls based on known models for circuit-switched traffic and packet-switched traffic. In addition, modeling module 206 may model the effects of propagation and mobility for each call. Modeling module 206 passes the requests in messages to simulation controller 200. Simulation controller 200 then passes the requests to event controller 208.

Event controller 208 receives the requests and creates respective events. Event controller 208 then aggregates these events into event list 216. For example, upon receiving the generated calls from modeling module 206, simulation controller 200 may pass the calls to event controller 208. Event controller 208 then interprets each of the generated calls, creates a respective event, and inserts the events into event list 216 to generate a heterogeneous mix of traffic.

In addition, simulation controller 200 notifies statistics collector 212 of the requests. In response, statistics collector 212 updates statistics table 218 and begins tracking data for each call.

In stage 406, channel resource manager 210 reads the events in event list 216 and determines whether an event is requesting resources from virtual representation 102. In particular, channel resource manager 210 may interpret information in one or more fields of event list 216 to determine whether resources are requested. For example, channel resource manager 210 may interpret an event indicating the start of a call as requesting resources from virtual representation 102. If resources are not requested, then processing flows to stage 420. However, if resources are requested, then processing flows to stage 408.

In stage 408, channel resource manager 210 determines whether resources are available for the calls indicated in event list 216. In particular, channel resource manager 210 may access event list 216 and determine which calls are currently pending. Channel resource manager 210 may then queue the pending calls based, for example, on their priority or traffic type. Channel resource manager 210 may then access and search resource table 214 to determine which resources are available for the pending calls.

if resources are available, then processing flows to stage 410. In stage 410, channel resource manager 210 allocates one or more resources to a pending call. Channel resource manager 210 may allocate resources to a pending call based on one or more algorithms, such as a first-in, first-out algorithm, a modified version of the multiple access scheme used by the GSM Phase 2+ GPRS, weighted fair queuing, etc. and depending on whether uplink or down-link communications are being simulated. In addition, channel resource manager 210 may allocate resources based on the received input parameters that indicate, for example, how resources of virtual representation 102 that are indicated in resource table 214 are shared between circuit-switched traffic and packet-switched traffic.

In stage 412, channel resource manager 210 updates resource table 214 to indicate which resources of virtual representation 102 were allocated to a call. Upon allocating the resources, channel resource manager 210 sends a message to simulation controller 200 to indicate that resources of virtual representation 102 were allocated to a call. In response, simulation controller 200 may then send a message to event controller 208 and statistics controller 212. The message to event controller 208 triggers event controller 208 to generate the next event and update event list 216. The message to statistics collector 212 causes it update the data in statistics table 218 to reflect, for example, that resources of virtual representation 102 were allocated to the call and the time that the resources were allocated.

If resources are not available, the processing flows to stage 414. In stage 414, channel resource manager 210 determines whether the pending calls have reached their delay or interference limit. In particular, channel resource manager 210 may determine how long a pending call has been delayed based on timing information, such as a start time indicated in event list 216 for that call. In addition, channel resource manager 210 may determine if a call is affected by interference based on propagation information provided in event list 216 for the call. Channel resource manager 210 may then compare the timing information and propagation information to specified limits. For example, channel resource manager 210 may determine limits based on information in event list 216 or based on the received input parameters.

If the delay or interference limit has been reached, then processing flows to stage 416. In stage 416, channel resource manager 210 drops the call and notifies simulation controller 200. In response, simulation controller 200 may send a message to statistics collector 212 to update statistics table 218 to record that the call was dropped.

If the delay or interference limit has not been reached, then processing flows to stage 418. In stage 418, channel resource manager 210 holds the call in its queues for later processing and notifies simulation controller 200 that the call is being delayed. In response, simulation controller 200 may send a message to statistics collector 212 to update statistics table 218 and record the amount of time that the call is being delayed.

Referring now to Fig. 5, in stage 420, channel resource manager 210 determines whether a call has ended. In particular, event controller 208 may generate an event to indicate that a call has ended. Event controller 208 may generate this event, for example, based on call length information provided from modeling module 206. When a call length is reached, event controller 208 may insert an event in event list 216 to end the call. As channel resource manager 210 reads event list 216, channel resource manager 210 may identify this event and determine what resources of virtual representation 102 were allocated to the ending call based on searching resource table 214.

If a call has ended, then processing flows to stage 422. In stage 422, channel resource manager 210 releases any resources of virtual representation 102 allocated to that call by updating resource table 214. Otherwise, if a call has not ended, then processing may proceed directly to stage 426.

In stage 424, event controller 208 updates event list 216 to reflect the ending of a call. In particular, upon releasing the resources of virtual representation 102 allocated to the ending call, channel resource manager 210 may delete the events for the call from event list 216. In addition, channel resource manager 210 may notify simulation controller 210 that a call has ended. Simulation controller 200 may then send one or more messages to event controller 208 and statistics collector 212. In response to these messages, event controller 208 may generate new events for calls generated by modeling module 206 and update event list 216 accordingly. In addition, the messages to statistics collector 212 may trigger the update of statistics table 218 to record the completion of the call.

In stage 426, simulation controller 200 checks whether the simulation run is complete. In particular, simulation controller 200 may check the control information from the input parameters to determine, for example, a run time specified for the simulation in the received parameters. In addition, simulation controller 200 may also check whether a requested number of repetitions of the simulation run have been completed.

If the simulation is complete, then processing ends at stage 428. However, if the simulation is not complete, then processing flows to stage 430. In stage 430, channel resource manager 210 proceeds to the next event in event list 216. Processing then repeats again at stage 408, which is described above with reference to Fig. 4.

Figs. 6-17 show exemplary graphs that may be provided to illustrate a network's anticipated performance based on the simulated traffic, in accordance with the principles of the present invention. For example, Fig. 6 shows a graph illustrating the percentage of bursts that exceeded their delay limits versus an aggregate cell throughput. In this simulation, virtual representation 102 was configured as a GSM-GPRS system loaded with multiple mixes of circuit-switched and packet-switched traffic. In addition, the performance of virtual representation 102 was tested by changing the number of resources reserved for circuit-switched and packet-switched traffic.

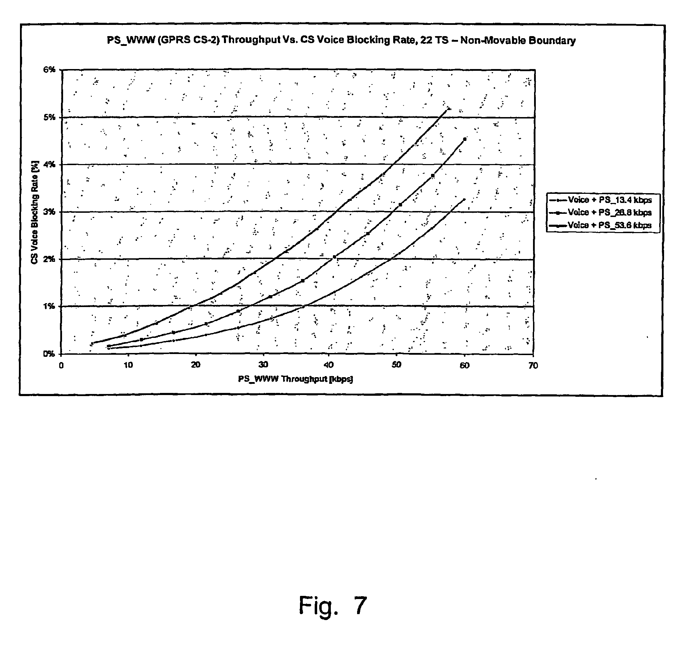

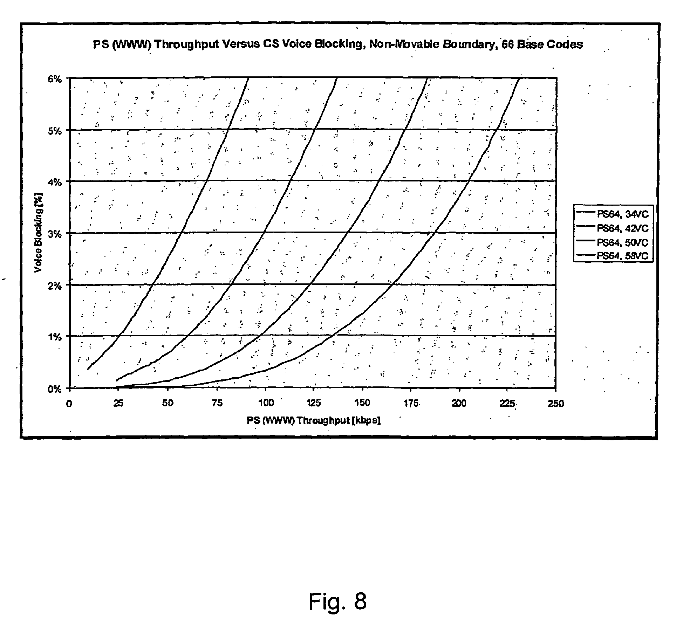

Figs. 7 and 8 show graphs illustrating the resulting blocking for circuit-switched traffic versus the throughput of packet-switched traffic. In these simulations, virtual representation 102 was configured as a GSM network and loaded with various mixes of circuit-switched and packet-switched traffic. In addition, virtual representation 102 was configured such that all resources were available for use by circuit-switched and packet-switched traffic without restrictions.

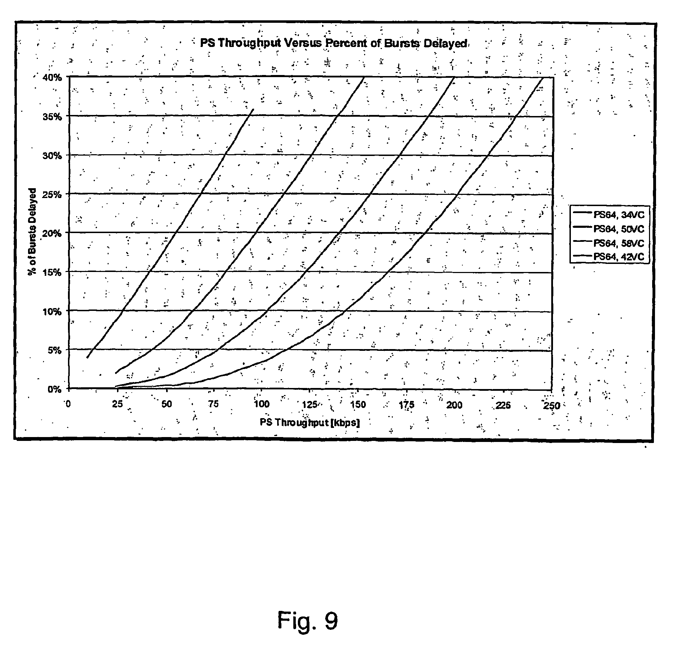

Fig. 9 shows a graph illustrating the throughput of packet-switched traffic versus the percentage of bursts that experienced delay. In this simulation, virtual representation 102 was loaded with various mixes of circuit-switched and packet-switched traffic, wherein the mean levels of voice traffic was varied.

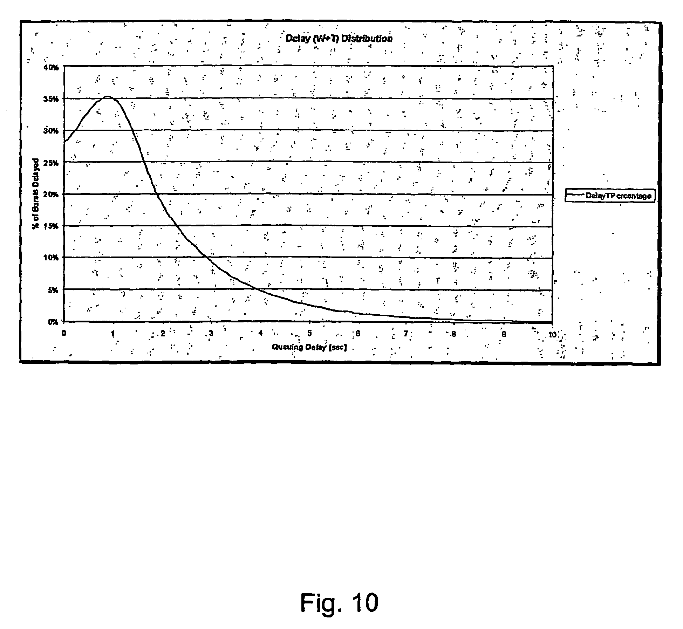

Fig. 10 shows a graph illustrating the distribution of the percentage of bursts that experience a given amount of mean delay for a given mix of circuit-switched and packet-switched traffic.

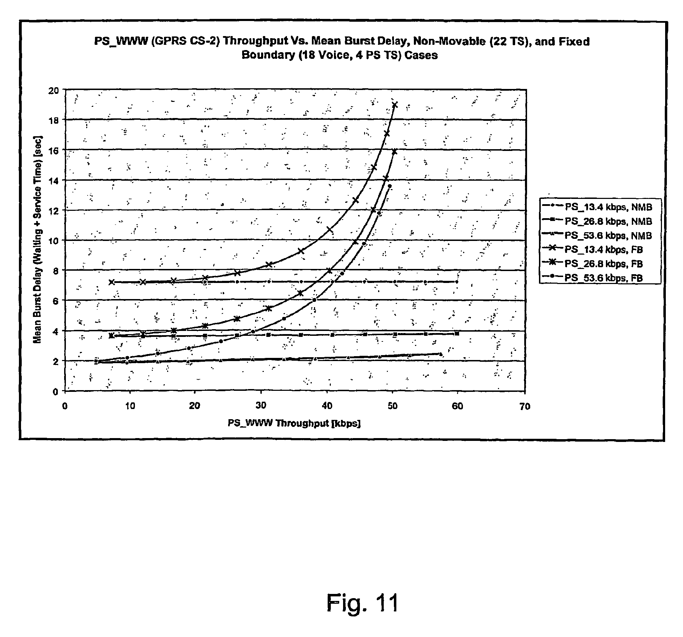

Fig. 11 shows a graph illustrating the percentage of packet-switched bursts that were delayed versus a mean throughput for packet-switched traffic. In this simulation, virtual representation 102 was loaded with various mixes of circuit-switched and packet-switched traffic using various resource sharing schemes.

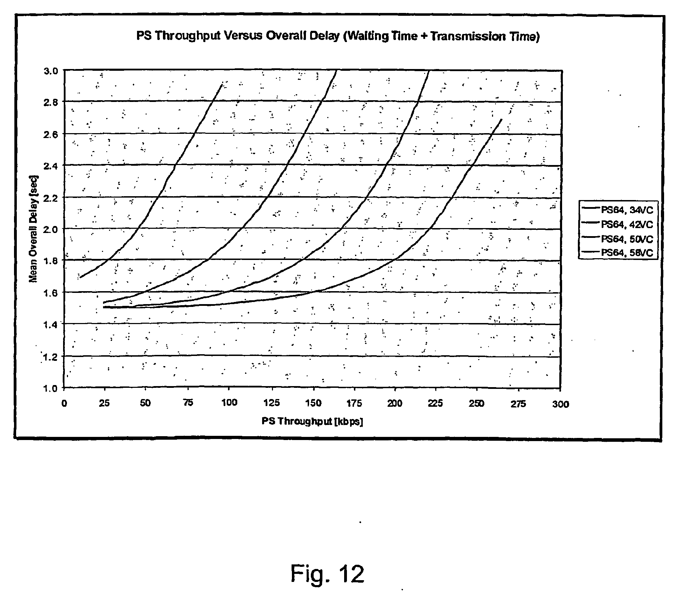

Fig. 12 shows a graph illustrating a mean burst delay for packet-switched traffic versus packet-switched traffic throughput. In this simulation, virtual representation 102 was loaded with various mixes of circuit-switched and packet-switched traffic, wherein the mean level of circuit-switched traffic was varied.

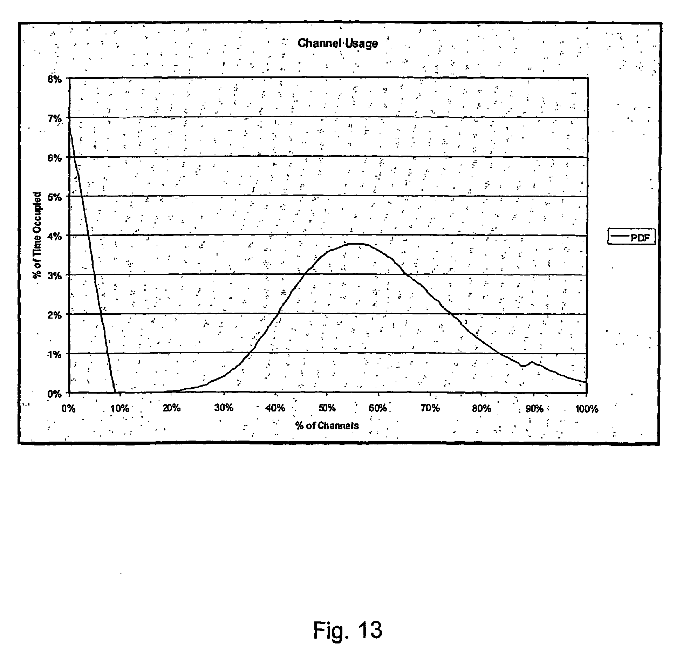

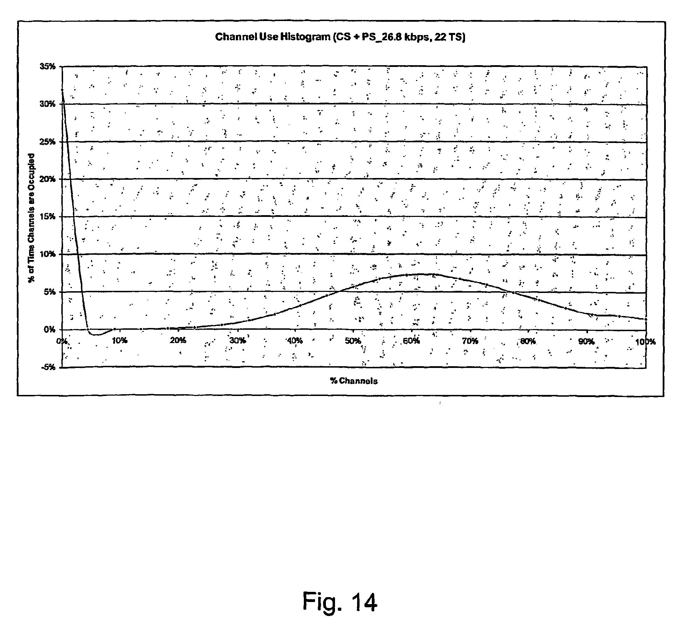

Figs. 13 and 14 illustrate graphs showing a channel occupancy distribution versus the amount of time a given percentage of channels were occupied. In these simulations, virtual representation 102 was loaded with a particular mix of circuit-switched and packet-switched traffic.

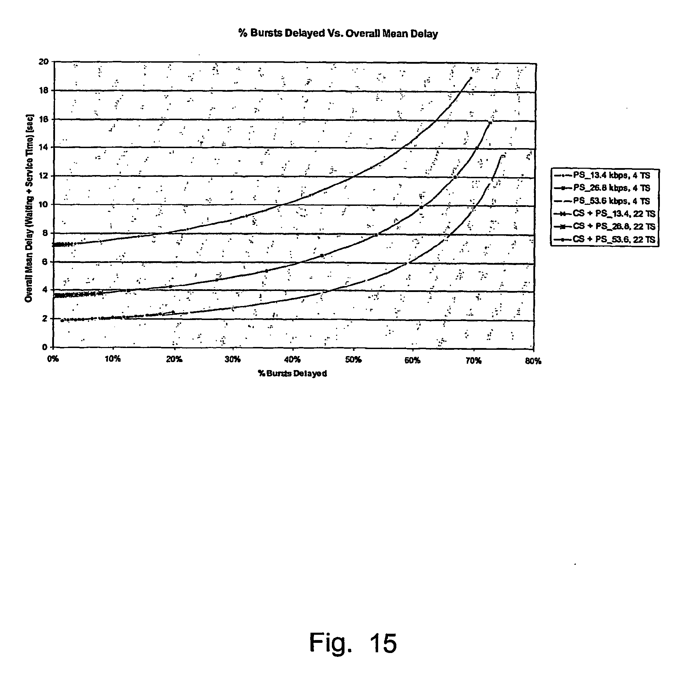

Fig. 15 illustrates a graph showing a relationship between the mean burst delay for packet-switched traffic and the percentage of bursts that were delayed. In this simulation, virtual representation 102 was loaded with various mixes of circuit-switched and packet-switched traffic, wherein the resource sharing schemes were varied. As shown in Fig. 15, for a given amount of resources in virtual representation 102, the percentage of bursts delayed increases as the amount circuit-switched and packet-switched traffic increases.

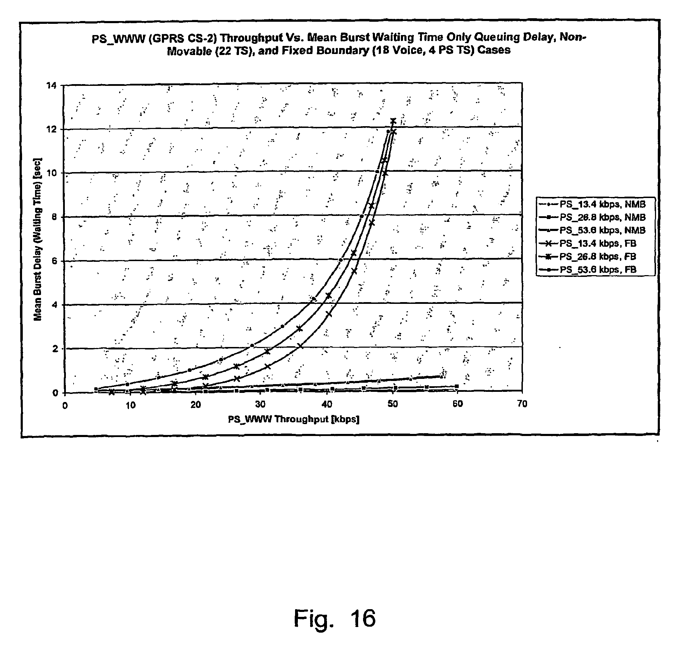

Fig. 16 illustrates a graph showing the mean waiting time delay packet-switched burst versus throughput for packet-switched traffic. In this simulation, virtual representation 102 was loaded with various mixes of circuit-switched and packet-switched traffic, wherein the resource sharing schemes were varied.

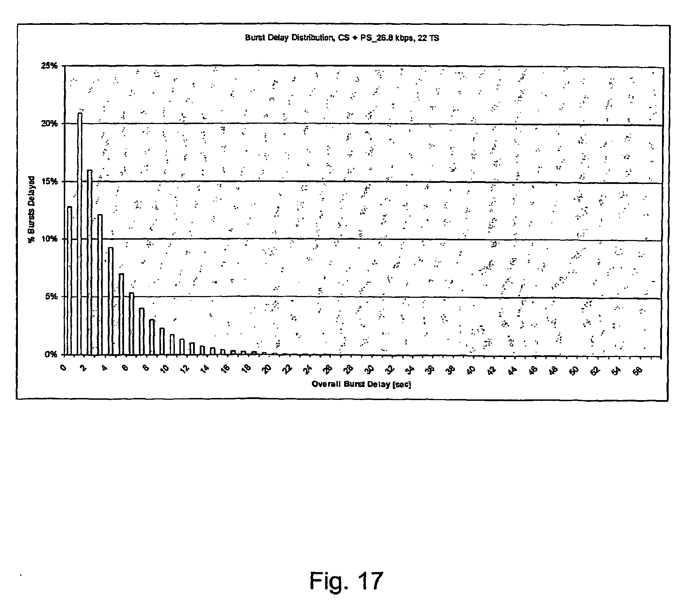

Fig. 17 illustrates a graph showing a distribution of the overall delays in bursts in packet-switched traffic versus the percentage bursts delayed. In this simulation, virtual representation 102 was loaded with a particular mix of circuit-switched and packet-switched traffic.

## Claims

1. A method for simulating a network processing circuit-based traffic and packet-based traffic using at least one model, said method comprising:
receiving information indicating a configuration of resources in the network;
receiving a first set of parameters for circuit-based traffic;
receiving a second set of parameters for packet-based traffic;
receiving information that specifies how resources in the network are shared for servicing the circuit-based traffic and packet-based traffic;
generating respective requests for the circuit-based traffic based on the first set of parameters and at least one model for simulating the circuit-based traffic and for the packet-based traffic based on the second set of parameters and at least one model for simulating the packet-based traffic;
determining resources available in the network for servicing the requests based on the configuration of the network and the information that specifies the sharing of the resources in the network;
determining events for each of the requests based on the availability of resources in the network; and
determining statistics that indicate a quality of service provided by the network for the requests based on the determined events.

2. The method of claim 1, wherein receiving the information indicating the configuration of the network comprises receiving information indicating the configuration of a portion of a wireless network.

3. The method of claim 1 or 2, wherein generating the respective requests for the circuit-based traffic based on the first set of parameters and the at least one model comprises:
receiving a mean rate of call arrival for the circuit-based traffic based on the first set of parameters;
receiving a mean call length for the circuit-based traffic based on the first set of parameters; and
generating requests for the circuit-based traffic based on the mean rate of call arrival, mean call length, and an Erlang-B model.

4. The method of any of the preceding claims, wherein generating the respective requests for the packet-based traffic comprises:
receiving a mean rate of arrival for sessions of the packet-based traffic based on the second set of parameters;
receiving a respective type for each of the sessions based on the second set of parameters;
receiving a mean amount of bursts for each of the sessions based on the second set of parameters;
receiving a mean number of packets for each burst; and
generating requests for the packet-based traffic based on the mean rate of arrival for the sessions, the respective type for each of the sessions, the mean amount of bursts for each of the sessions, and the mean number of packets for each burst.

5. The method of any of the preceding claims, wherein determining events for each of the requests comprises determining when the requests are allocated to the resources in the network.

6. The method of any of the preceding claims, wherein determining events for each of the requests comprises determining when the requests are denied allocation to the resources in the network.

7. The method of any of the preceding claims, wherein determining events for each of the requests comprises:
determining when the requests are delayed from being allocated to the resources in the network; and
determining a period of time that the requests were delayed.

8. The method of any of the preceding claims, wherein determining events for each of the requests comprises:
determining when the requests have priority over other traffic that has been queued;
determining when the requests have priority over other traffic that has been allocated to resources in the network; and
determining whether the requests preempt the traffic that has been allocated resources based on the priority.

9. The method of any of the preceding claims, wherein determining events for each of the requests comprises determining when the resources of the network have completed servicing the requests.

10. The method of any of the preceding claims, wherein determining statistics that indicate the quality of service provided by the network comprises determining a rate that the circuit-based traffic was blocked from service by the network.

11. The method of any of the preceding claims, wherein determining statistics that indicate the quality of service provided by the network comprises determining a rate that the packet-based traffic was blocked from service by the network.

12. The method of any of the preceding claims, wherein determining statistics that indicate the quality of service provided by the network comprises determining an amount that the packet-based traffic was delayed while traversing the network.

13. The method of any of the preceding claims, wherein determining statistics that indicate the quality of service provided by the network comprises determining a throughput for the packet-based traffic.

14. An apparatus for simulating a network processing circuit-based traffic and packet-based traffic using at least one model, said apparatus comprising:
means for receiving information indicating a configuration of resources in the network;
means for receiving a first set of parameters for circuit-based traffic;
means for receiving a second set of parameters for packet-based traffic;
means for receiving information that specifies how resources in the network are shared for servicing the circuit-based traffic and packet-based traffic;
means for generating respective requests for the circuit-based traffic based on the first set of parameters and at least one model for simulating the circuit-based traffic and for the packet-based traffic based on the second set of parameters and at least one model for simulating the packet-based traffic;
means for determining resources available in the network for servicing the requests based on the configuration of the network and the information that specifies the sharing of the resources in the network;
means for determining events for each of the requests based on the availability of resources in the network; and
means for determining statistics that indicate a quality of service provided by the network for the requests the based on the determined events.

15. A computer program product for enabling a processor to simulate a network processing circuit-based traffic and packet-based traffic using at least one model, said computer program product comprising code, said code comprising:
code for receiving information indicating a configuration of resources in the network;
code for receiving a first set of parameters for circuit-based traffic;
code for receiving a second set of parameters for packet-based traffic;
code for receiving information that specifies how resources in the network are shared for servicing the circuit-based traffic and packet-based traffic;
code for generating respective requests for the circuit-based traffic based on the first set of parameters and at least one model for simulating the circuit-based traffic and for the packet-based traffic based on the second set of parameters and at least one model for simulating the packet-based traffic;
code for determining resources available in the network for servicing the requests based on the configuration of the network and the information that specifies the sharing of the resources in the network;
code for determining events for each of the requests based on the availability of resources in the network; and
code for determining statistics that indicate a quality of service provided by the network for the requests based on the determined events.

16. A system for simulating a network processing circuit-based traffic and packet-based traffic using at least one model, said system comprising:
an interface configured to receive information indicating a configuration of resources in the network, a first set of parameters for circuit based traffic, and a second set of parameters for packet-based traffic;
a resource table that indicate resources in the network available for servicing the circuit-based traffic and packet-based traffic;
at least one model for generating simulated circuit-based traffic based on the first set of parameters and at least one model for generating simulated packet-based traffic based on the second set of parameters;
a resource manager that allocates resources to service the simulated circuit-based traffic and simulated packet-based traffic based on the configuration of the network and the resource table; and
a statistics collector that determines statistics indicating a quality of service provided by the network when servicing the simulated circuit-based traffic and simulated packet-based traffic based on the allocation of resources.

## Patentansprüche

1. Verfahren zum Simulieren eines Netzwerkes, das Verkehr auf Schaltungs-Basis und Verkehr auf Paket-Basis verarbeitet, unter Verwendung wenigstens eines Modells, wobei das Verfahren umfasst:
Empfangen von Informationen, die eine Konfiguration von Ressourcen in dem Netz angeben;
Empfangen einer ersten Menge von Parametern für den schaltungsbasierten Verkehr;
Empfangen einer zweiten Menge von Parametern für den paketbasierten Verkehr;
Empfangen von Informationen, die spezifizieren, wie Ressourcen in dem Netz gemeinsam genutzt werden, um den schaltungsbasierten Verkehr und den paketbasierten Verkehr zu bedienen;
Erzeugen entsprechender Anforderungen für den schaltungsbasierten Verkehr auf der Grundlage der ersten Menge von Parametern und wenigstens eines Modells zum Simulieren des schaltungsbasierten Verkehrs und für den paketbasierten Verkehr auf der Grundlage der zweiten Menge von Parametern und wenigstens eines Modells zum Simulieren des paketbasierten Verkehrs;
Bestimmen von in dem Netz verfügbaren Ressourcen, um die Anforderungen zu bedienen, anhand der Konfiguration des Netzes und der Informationen, die die gemeinsame Nutzung der Ressourcen in dem Netz spezifizieren;
Bestimmen von Ereignissen für jede der Anforderungen auf der Grundlage der Verfügbarkeit der Ressourcen in dem Netz; und
Bestimmen von Statistiken, die eine von dem Netz bereitgestellte Dienstqualität angeben, für die Anforderungen auf der Grundlage der bestimmten Ereignisse.

2. Verfahren nach Anspruch 1, bei dem das Empfangen der Informationen, die die Konfiguration des Netzes angeben, das Empfangen von Informationen, die die Konfiguration eines Teils eines drahtlosen Netzes angeben, umfasst.

3. Verfahren nach Anspruch 1 oder 2, bei dem das Erzeugen der entsprechenden Anforderungen für den schaltungsbasierten Verkehr auf der Grundlage der ersten Menge von Parametern und des wenigstens einen Modells umfasst:
Empfangen einer mittleren Rate ankommender Anrufe für den schaltungsbasierten Verkehr auf der Grundlage der ersten Menge von Parametern;
Empfangen einer mittleren Anruflänge für den schaltungsbasierten Verkehr auf der Grundlage der ersten Menge von Parametern; und
Erzeugen von Anforderungen für den schaltungsbasierten Verkehr auf der Grundlage der mittleren Rate ankommender Anrufe, der mittleren Anruflänge und eines Erlang-B-Modells.

4. Verfahren nach einem der vorhergehenden Ansprüche, bei dem das Erzeugen der entsprechenden Anforderungen für den paketbasierten Verkehr umfasst:
Empfangen einer mittleren Ankunftsrate für Sitzungen des paketbasierten Verkehrs auf der Grundlage der zweiten Menge von Parametern;
Empfangen eines jeweiligen Typs für jede der Sitzungen auf der Grundlage der zweiten Menge von Parametern;
Empfangen einer mittleren Menge von Bursts für jede der Sitzungen auf der Grundlage der zweiten Menge von Parametern;
Empfangen einer mittleren Anzahl von Paketen für jeden Burst; und
Erzeugen von Anforderungen für den paketbasierten Verkehr auf der Grundlage der mittleren Ankunftsrate für die Sitzungen, des jeweiligen Typs für jede der Sitzungen, der mittleren Menge von Bursts für jede der Sitzungen und der mittleren Anzahl von Paketen für jeden Burst.

5. Verfahren nach einem der vorhergehenden Ansprüche, bei dem das Bestimmen von Ereignissen für jede der Anforderungen das Bestimmen, wann die Zuweisung der Anforderungen zu den Ressourcen in dem Netz ausgeführt wird, umfasst.

6. Verfahren nach einem der vorhergehenden Ansprüche, bei dem das Bestimmen von Ereignissen für jede der Anforderungen das Bestimmen, wann die Zuweisung der Anforderungen zu den Ressourcen in dem Netz verweigert wird, umfasst.

7. Verfahren nach einem der vorhergehenden Ansprüche, bei dem das Bestimmen von Ereignissen für jede der Anforderungen umfasst:
Bestimmen, wann die Zuweisung der Anforderungen zu den Ressourcen in dem Netz verzögert wird; und
Bestimmen einer Zeitdauer, um die die Anforderungen verzögert werden.

8. Verfahren nach einem der vorhergehenden Ansprüche, bei dem das Bestimmen von Ereignissen für jede der Anforderungen umfasst:
Bestimmen, wann die Anforderungen Priorität gegenüber einem anderen Verkehr, der in eine Warteschlange eingereiht worden ist, haben;
Bestimmen, wann die Anforderungen Priorität gegenüber einem anderen Verkehr haben, der Ressourcen in dem Netz zugewiesen worden ist; und
Bestimmen, ob die Anforderungen den Verkehr, dem Ressourcen zugewiesen worden sind, anhand der Priorität unterbrechen.

9. Verfahren nach einem der vorhergehenden Ansprüche, bei dem das Bestimmen von Ereignissen für jede der Anforderungen das Bestimmen, wann die Ressourcen des Netzes die Bedienung der Anforderungen abgeschlossen haben, umfasst.

10. Verfahren nach einem der vorhergehenden Ansprüche, bei dem das Bestimmen der Statistiken, die die von dem Netz bereitgestellte Dienstqualität angeben, das Bestimmen einer Rate, mit der der schaltungsbasierte Verkehr keinen Dienst durch das Netz erhalten hat, umfasst.

11. Verfahren nach einem der vorhergehenden Ansprüche, bei dem das Bestimmen der Statistiken, die die von dem Netz bereitgestellte Dienstqualität angeben, das Bestimmen einer Rate, mit der der paketbasierte Verkehr keinen Dienst durch das Netz erhalten hat, umfasst.

12. Verfahren nach einem der vorhergehenden Ansprüche, bei dem das Bestimmen der Statistiken, die die von dem Netz bereitgestellte Dienstqualität angeben, das Bestimmen eines Betrags, um den der paketbasierte Verkehr beim Durchgang durch das Netz verzögert wurde, umfasst.

13. Verfahren nach einem der vorhergehenden Ansprüche, bei dem die Statistiken, die die von dem Netz bereitgestellte Dienstqualität angeben, das Bestimmen eines Durchsatzes für den paketbasierten Verkehr umfasst.

14. Vorrichtung zum Simulieren eines Netzwerkes, das Verkehr auf Schaltungs-Basis und Verkehr auf Paket-Basis verarbeitet, unter Verwendung wenigstens eines Modells, wobei die Vorrichtung umfasst:
Mittel, um Informationen zu empfangen, die eine Konfiguration von Ressourcen in dem Netz angeben;
Mittel, um eine erste Menge von Parametern für den schaltungsbasierten Verkehr zu empfangen;
Mittel, um eine zweite Menge von Parametern für den paketbasierten Verkehr zu empfangen;
Mittel, um Informationen zu empfangen, die spezifizieren, wie Ressourcen in dem Netz für die Bedienung des schaltungsbasierten Verkehrs und des paketbasierten Verkehrs gemeinsam genutzt werden;
Mittel, um entsprechende Anforderungen für den schaltungsbasierten Verkehr auf der Grundlage der ersten Menge von Parametern und wenigstens eines Modells zum Simulieren des schaltungsbasierten Verkehrs und für den paketbasierten Verkehr auf der Grundlage der zweiten Menge von Parametern und wenigstens eines Modells zum Simulieren des paketbasierten Verkehrs zu erzeugen;
Mittel, um Ressourcen zu bestimmen, die im Netz für die Bedienung der Anforderungen verfügbar sind, auf der Grundlage der Konfiguration des Netzes und der Informationen, die die gemeinsame Nutzung der Ressourcen in dem Netz spezifizieren;
Mittel, um Ereignisse für jede der Anforderungen auf der Grundlage der Verfügbarkeit der Ressourcen in dem Netz zu bestimmen; und
Mittel, um eine Statistik zu bestimmen, die eine von dem Netz bereitgestellte Dienstqualität für die Anforderungen angibt, auf der Grundlage der bestimmten Ereignisse.

15. Computerprogrammprodukt, das einem Prozessor ermöglicht, ein Netzwerk, das Verkehr auf Schaltungs-Basis und Verkehr auf Paket-Basis verarbeitet, unter Verwendung wenigstens eines Modells zu simulieren, wobei das Computerprogrammprodukt Code enthält, der umfasst:
Code, um Informationen zu empfangen, die eine Konfiguration von Ressourcen in dem Netz angeben;
Code, um eine erste Menge von Parametern für den schaltungsbasierten Verkehr zu empfangen;
Code, um eine zweite Menge von Parametern für den paketbasierten Verkehr zu empfangen;
Code, um Informationen zu empfangen, die spezifizieren, wie Ressourcen in dem Netz für die Bedienung des schaltungsbasierten Verkehrs und des paketbasierten Verkehrs gemeinsam genutzt werden;
Code, um entsprechende Anforderungen für den schaltungsbasierten Verkehr auf der Grundlage der ersten Menge von Parametern und wenigstens eines Modells zum Simulieren des schaltungsbasierten Verkehrs und für den paketbasierten Verkehr auf der Grundlage der zweiten Menge von Parametern und wenigstens eines Modells zum Simulieren des paketbasierten Verkehrs zu erzeugen;
Code, um Ressourcen zu bestimmen, die in dem Netz für die Bedienung der Anforderungen verfügbar sind, auf der Grundlage der Konfiguration des Netzes und der Informationen, die die gemeinsame Nutzung der Ressourcen in dem Netz spezifizieren;
Code, um Ereignisse für jede der Anforderungen auf der Grundlage der Verfügbarkeit der Ressourcen in dem Netz zu bestimmen; und
Code, um eine Statistik zu bestimmen, die eine von dem Netz bereitgestellte Dienstqualität für die Anforderungen angibt, auf der Grundlage der bestimmten Ereignisse.

16. System zum Simulieren eines Netzwerkes, das Verkehr auf Schaltungs-Basis und Verkehr auf Paket-Basis verarbeitet, unter Verwendung wenigstens eines Modells, wobei das System umfasst:
eine Schnittstelle, die so konfiguriert ist, dass sie Informationen, die eine Konfiguration von Ressourcen in dem Netz angeben, eine erste Menge von Parametern für den schaltungsbasierten Verkehr und eine zweite Menge von Parametern für den paketbasierten Verkehr empfängt;
eine Ressourcen-Tabelle, die Ressourcen in dem Netz angibt, die für die Bedienung des schaltungsbasierten Verkehrs und des paketbasierten Verkehrs verfügbar sind;
wenigstens ein Modell, um simulierten schaltungsbasierten Verkehr auf der Grundlage der ersten Menge von Parametern zu erzeugen, und wenigstens ein Modell, um simulierten paketbasierten Verkehr auf der Grundlage der zweiten Menge von Parametern zu erzeugen;
einen Ressourcen-Manager, der Ressourcen für die Bedienung des simulierten schaltungsbasierten Verkehrs und des simulierten paketbasierten Verkehrs auf der Grundlage der Konfiguration des Netzes und der Ressourcen-Tabelle zuweist; und
eine Statistik-Sammeleinrichtung, die Statistiken bestimmt, die eine von dem Netz bereitgestellte Dienstqualität angeben, wenn der simulierte schaltungsbasierte Verkehr und der simulierte paketbasierte Verkehr bedient werden, und zwar auf der Grundlage der Zuweisung von Ressourcen.

## Revendications

1. Procédé pour la simulation d'un réseau prenant en charge un trafic basé sur la commutation de circuits et un trafic basé sur la commutation de paquets en utilisant au moins un modèle, ledit procédé comprenant les étapes consistant à :
recevoir des informations relatives à une configuration de ressources dans le réseau ;
recevoir un premier ensemble de paramètres relatif à un trafic basé sur la commutation de circuits ;
recevoir un second ensemble de paramètres relatif à un trafic basé sur la commutation de paquets ;
recevoir des informations qui spécifient comment des ressources dans le réseau sont partagées pour prendre en charge le trafic basé sur la commutation de circuits et le trafic basé sur la commutation de paquets ;
générer des demandes respectives pour le trafic basé sur la commutation de circuits sur la base du premier ensemble de paramètres et d'au moins un modèle pour la simulation du trafic basé sur la commutation de circuits, et pour le trafic basé sur la commutation de paquets sur la base du second ensemble de paramètres et d'au moins un modèle pour la simulation du trafic basé sur la commutation de paquets ;
déterminer des ressources disponibles dans le réseau pour satisfaire les demandes sur la base de la configuration du réseau et des informations qui spécifient le partage des ressources dans le réseau ;
déterminer des événements pour chacune des demandes sur la base de la disponibilité de ressources dans le réseau ; et
déterminer des statistiques relatives à une qualité de service fournie par le réseau pour les demandes sur la base des événements déterminés.

2. Procédé selon la revendication 1, dans lequel l'étape de réception des informations relatives à la configuration du réseau comprend l'étape consistant à recevoir des informations relatives à la configuration d'une partie d'un réseau sans fil.

3. Procédé selon la revendication 1 ou 2, dans lequel l'étape de génération des demandes respectives pour le trafic basé sur la commutation de circuits sur la base du premier ensemble de paramètres et du au moins un modèle comprend les étapes consistant à :
recevoir un taux moyen d'arrivée d'appels pour le trafic basé sur la commutation de circuits sur la base du premier ensemble de paramètres ;
recevoir une longueur d'appels moyenne pour le trafic basé sur la commutation de circuits sur la base du premier ensemble de paramètres ; et
générer des demandes pour le trafic basé sur la commutation de circuits sur la base du taux moyen d'arrivée d'appels, de la longueur d'appels moyenne, et d'un modèle Erlang-B.

4. Procédé selon l'une quelconque des revendications précédentes, dans lequel l'étape de génération des demandes respectives pour le trafic basé sur la commutation de paquets comprend les étapes consistant à :
recevoir un taux moyen d'arrivée pour des sessions du trafic basé sur la commutation de paquets sur la base du second ensemble de paramètres :
recevoir un type respectif pour chacune des sessions sur la base du second ensemble de paramètres ;
recevoir une quantité moyenne de salves pour chacune des sessions sur la base du second ensemble de paramètres ;
recevoir un nombre de paquets moyen pour chaque salve ; et
générer des demandes pour le trafic basé sur la commutation de paquets sur la base du taux moyen d'arrivée pour les sessions, du type respectif pour chacune des sessions, de la quantité moyenne de salves pour chacune des sessions, et du nombre moyen de paquets pour chaque salve.

5. Procédé selon l'une quelconque des revendications précédentes, dans lequel l'étape de détermination d'événements pour chacune des demandes comprend l'étape consistant à déterminer à quel moment les demandes sont attribuées aux ressources dans le réseau.

6. Procédé selon l'une quelconque des revendications précédentes, dans lequel l'étape de détermination d'événements pour chacune des demandes comprend l'étape consistant à déterminer à quel moment l'attribution des demandes aux ressources dans le réseau est refusée.

7. Procédé selon l'une quelconque des revendications précédentes, dans lequel l'étape de détermination d'événements pour chacune des demandes comprend les étapes consistant à :
déterminer à quel moment l'attribution des demandes aux ressources dans le réseau est retardée ; et
déterminer une période de temps durant laquelle les demandes ont été retardées.

8. Procédé selon l'une quelconque des revendications précédentes, dans lequel l'étape de détermination d'événements pour chacune des demandes comprend les étapes consistant à :
déterminer à quel moment les demandes ont la priorité sur un autre trafic qui a été mis en file d'attente ;
déterminer à quel moment les demandes ont la priorité sur un autre trafic qui a été attribué à des ressources dans le réseau ; et
déterminer si les demandes prévalent sur le trafic qui a été attribué à des ressources sur la base de la priorité.

9. Procédé selon l'une quelconque des revendications précédentes, dans lequel l'étape de détermination d'événements pour chacune des demandes comprend l'étape consistant à déterminer à quel moment les ressources du réseau ont accompli la prise en charge des demandes.

10. Procédé selon l'une quelconque des revendications précédentes, dans lequel l'étape de détermination de statistiques relatives à la qualité de service fournie par le réseau comprend l'étape consistant à déterminer un taux suivant lequel le trafic basé sur la commutation de circuits a été empêché d'être pris en charge par le réseau.

11. Procédé selon l'une quelconque des revendications précédentes, dans lequel l'étape de détermination de statistiques relatives à la qualité de service fournie par le réseau comprend l'étape consistant à déterminer un taux suivant lequel le trafic basé sur la commutation de paquets a été empêché d'être pris en charge par le réseau.

12. Procédé selon l'une quelconque des revendications précédentes, dans lequel l'étape de détermination de statistiques relatives à la qualité de service fournie par le réseau comprend l'étape consistant à déterminer un quantité de temps durant laquelle le trafic basé sur la commutation de paquets a été retardé au cours de son passage à travers le réseau.

13. Procédé selon l'une quelconque des revendications précédentes, dans lequel l'étape de détermination de statistiques relatives à la qualité de service fournie par le réseau comprend l'étape consistant à déterminer un débit pour le trafic basé sur la commutation de paquets.

14. Appareil pour la simulation d'un réseau prenant en charge un trafic basé sur la commutation de circuits et un trafic basé sur la commutation de paquets en utilisant au moins un modèle, ledit appareil comprenant :
des moyens pour recevoir des informations relatives à une configuration de ressources dans le réseau ;
des moyens pour recevoir un premier ensemble de paramètres relatif à un trafic basé sur la commutation de circuits ;
des moyens pour recevoir un second ensemble de paramètres relatif à un trafic basé sur la commutation de paquets ;
des moyens pour recevoir des informations qui spécifient comment des ressources dans le réseau sont partagées pour prendre en charge le trafic basé sur la commutation de circuits et le trafic basé sur la commutation de paquets ;
des moyens pour générer des demandes respectives pour le trafic basé sur la commutation de circuits sur la base du premier ensemble de paramètres et d'au moins un modèle pour la simulation du trafic basé sur la commutation de circuits, et pour le trafic basé sur la commutation de paquets sur la base du second ensemble de paramètres et d'au moins un modèle pour la simulation du trafic basé sur la commutation de paquets ;
des moyens pour déterminer des ressources disponibles dans le réseau pour satisfaire les demandes sur la base de la configuration du réseau et des informations qui spécifient le partage des ressources dans le réseau ;
des moyens pour déterminer des événements pour chacune des demandes sur la base de la disponibilité de ressources dans le réseau ; et
des moyens pour déterminer des statistiques relatives à une qualité de service fournie par le réseau pour les demandes sur la base des événements déterminés.

15. Produit de programme d'ordinateur adapté pour permettre à un processeur de simuler un réseau prenant en charge un trafic basé sur la commutation de circuits et un trafic basé sur la commutation de paquets en utilisant au moins un modèle, ledit produit de programme d'ordinateur comprenant un code, ledit code comprenant :
un code pour recevoir des informations relatives à une configuration de ressources dans le réseau ;
un code pour recevoir un premier ensemble de paramètres relatif à un trafic basé sur la commutation de circuits ;
un code pour recevoir un second ensemble de paramètres relatif à un trafic basé sur la commutation de paquets ;
un code pour recevoir des informations qui spécifient comment des ressources dans le réseau sont partagées pour prendre en charge le trafic basé sur la commutation de circuits et le trafic basé sur la commutation de paquets ;
un code pour générer des demandes respectives pour le trafic basé sur la commutation de circuits sur la base du premier ensemble de paramètres et d'au moins un modèle pour la simulation du trafic basé sur la commutation de circuits, et pour le trafic basé sur la commutation de paquets sur la base du second ensemble de paramètres et d'au moins un modèle pour la simulation du trafic basé sur la commutation de paquets ;
un code pour déterminer des ressources disponibles dans le réseau pour satisfaire les demandes sur la base de la configuration du réseau et des informations qui spécifient le partage des ressources dans le réseau ;
un code pour déterminer des événements pour chacune des demandes sur la base de la disponibilité de ressources dans le réseau ; et
un code pour déterminer des statistiques relatives à une qualité de service fournie par le réseau pour les demandes sur la base des événements déterminés.

16. Système pour la simulation d'un réseau prenant en charge un trafic basé sur la commutation de circuits et un trafic basé sur la commutation de paquets en utilisant au moins un modèle, ledit système comprenant :
une interface configurée pour recevoir des informations relatives à une configuration de ressources dans le réseau, un premier ensemble de paramètres relatif à un trafic basé sur la commutation de circuits, et un second ensemble de paramètres relatif à un trafic basé sur la commutation de paquets ;
une table de ressources qui indique des ressources dans le réseau qui sont disponibles pour prendre en charge le trafic basé sur la commutation de circuits et le trafic basé sur la commutation de paquets ;
au moins un modèle pour générer un trafic basé sur la commutation de circuits simulé sur la base du premier ensemble de paramètres et au moins un modèle pour générer un trafic basé sur la commutation de paquets simulé sur la base du second ensemble de paramètres ;
un gestionnaire de ressources qui affecte des ressources pour prendre en charge le trafic basé sur la commutation de circuits simulé et le trafic basé sur la commutation de paquets simulé, sur la base de la configuration du réseau et de la table de ressources ; et
un dispositif de collecte de statistiques qui détermine des statistiques relatives à une qualité de service fournie par le réseau quand il prend en charge le trafic basé sur la commutation de circuits simulé et le trafic basé sur la commutation de paquets simulé, sur la base de l'allocation de ressources.
